Europäisches Patentamt

(19) European Patent Office

Office européen des brevets

(11) Numéro de publication : **0 268 503 B1**

(12) **FASCICULE DE BREVET EUROPEEN**

(45) Date de publication du fascicule du brevet :
05.06.91 Bulletin 91/23

(51) Int. Cl.⁵ : **C03C 17/36**, C23C 4/12

(21) Numéro de dépôt : 87402098.5

(22) Date de dépôt : 21.09.87

(54) **Procédé de fabrication d'un vitrage revêtu d'une couche mince transparente, conductrice de l'électricité, munie d'électrodes d'amenée de courant en contact avec ladite couche.**

(30) Priorité : 24.09.86 DE 3632348

(43) Date de publication de la demande :
25.05.88 Bulletin 88/21

(45) Mention de la délivrance du brevet :
05.06.91 Bulletin 91/23

(84) Etats contractants désignés :
AT BE CH DE ES FR GB IT LI LU NL SE

(56) Documents cités :
EP-A- 0 226 901
CH-A- 376 615
FR-A- 1 192 483
US-A- 3 252 829

(73) Titulaire : SAINT-GOBAIN VITRAGE
INTERNATIONAL
18, avenue d'Alsace
F-92400 Courbevoie (FR)
AT BE CH DE ES FR GB IT LI LU NL SE
Titulaire : VEGLA Vereinigte Glaswerke GmbH
Viktoriaallee 3-5
W-5100 Aachen (DE)
DE

(72) Inventeur : Termath, Günter
Pannhütte 58
W-4850 Gelsenkirchen (DE)
Inventeur : Goerenz, Walter
Osterfeldstrasse 105
W-5110 Alsdorf (DE)
Inventeur : Muller, Achim
Gierlichstrasse 14
W-5120 Herzogenaurach (DE)
Inventeur : Steinhorster, Rüdiger
Tilsiterstrasse 4
W-5180 Eschweiler (DE)

(74) Mandataire : de Toytot, Robert et al
SAINT-GOBAIN RECHERCHE 39 quai Lucien
Lefranc
F-93300 Aubervilliers (FR)

## Description

L'invention concerne un procédé de fabrication d'un vitrage comprenant une feuille support en verre de silicate revêtu d'une couche, simple ou multiple, transparente et conductrice de l'électricité et au moins une électrode de contact disposée en contact électrique avec ladite couche.

Les vitrages munis de revêtements transparents conducteurs de l'électricité sont utilisés dans différents buts. Ils trouvent en particulier des applications comme vitrage chauffant (DE-AS 20 44 675, DE-OS 29 36 398), comme vitrage antenne, le cas échéant avec une fonction complémentaire de chauffage (DE-AS 23 60 672, DE-OS 34 10 415), ou comme vitrage de fenêtre à effet d'écran électromagnétique (DE-PS 29 46 519).

Les propriétés des électrodes de contact doivent satisfaire à des exigences différentes selon les applications envisagées. Les exigences les plus sévères correspondent aux vitrages chauffants, dont les couches conductrices présentent une transparence élevée dans le spectre visible, de plus de 70% par exemple, et en même temps une résistance superficielle faible, de l'ordre de 1 à 10 ohm par carré, du fait que ces couches résistantes sont soumises à des densités de courant très élevées, proches de leur limite admissible. Pour de tels vitrages chauffants, les couches de résistance doivent ne présenter aucune hétérogénéité, et en particulier le contact entre les électrodes et la couche de résistance ne doit donner lieu à aucune surcharge ponctuelle de courant électrique.

Selon le procédé de fabrication de vitrages chauffants divulgué par le document DE-AS 20 44 675, les électrodes d'amenée de courant sont formées tout d'abord sur la feuille support de verre, sous la forme d'un alliage de cuivre, par le procédé de pulvérisation à la flamme, puis la couche transparente conductrice de l'électricité est déposée sur le vitrage support et sur les électrodes d'amenée de courant par évaporation sous vide. Ce procédé doit permettre une grande sécurité, du point de vue mécanique de la fixation sur le vitrage d'électrodes d'amenée de courant en forme de bandes.

A cet effet, on dépose tout d'abord sur le vitrage une couche d'alliage de cuivre, puis cette couche est revêtue dans une deuxième étape, également par le procédé de pulvérisation à la flamme, d'une couche de protection métallique, avant que ne soit déposée par évaporation la couche transparente conductrice de l'électricité.

La disposition des électrodes d'amenée de courant en contact immédiat avec la surface du verre, c'est-à-dire au-dessous de la couche conductrice transparente déposée par évaporation n'est cependant pas utilisable dans tous les cas.

Ainsi ce procédé conduit à ces problèmes, par exemple, lors de la fabrication de vitrages automobiles chauffants bombés par la méthode selon laquelle un premier vitrage plan est revêtu d'une couche conductrice transparente sur toute sa surface, ce vitrage revêtu étant ensuite assemblé à un deuxième vitrage, et la paire de vitrages chauffée dans un four à la température de bombage et bombée à la forme souhaitée, les deux vitrages bombés étant ensuite, dans une étape ultérieure, assemblés en un vitrage feuilleté au moyen d'une couche de collage thermoplastique. Si dans ce cas les électrodes de contact, à cause de leur position au-dessous de la couche transparente, sont préparées obligatoirement avant le processus de bombage, lesdites électrodes forment saillie et entraînent, lors du ramollissement du vitrage, d'une part un risque de fracture dans le four de bombage du fait de l'absorption différenciée du rayonnement thermique, et d'autre part des déformations indésirables des vitrages superposés dans le domaine des électrodes.

En outre, il est apparu que, lors de l'évaporation de la couche conductrice sur les électrodes de contact préalablement déposées, le dépôt de la couche conductrice ne se produit pas avec la régularité souhaitable à la jonction entre les électrodes et la surface du verre sous-jacente, et que les hétérogénéités ainsi apparues représentent des points critiques, auxquels correspondent, lors du fonctionnement du pare-brise chauffant, des pointes locales d'intensité de courant, et auxquels la couche conductrice se trouve surchargée et grillée.

La voie qui consiste à déposer les électrodes de contact avec le même procédé, non pas directement sur la surface du verre, mais après le processus de bombage, sur la couche conductrice, s'est révélée inapplicable. Il est apparu en effet que les couches minces conductrices, ou le système de couches, changeaient de couleur lors de la pulvérisation à la flamme et dans certaines conditions étaient même endommagées ou détruites.

Pour les raisons ci-dessus énoncées, en vue de pallier à ces difficultés, les électrodes de contact sont en règle générale préparées à l'aide d'une peinture conductrice, qui est déposée, par exemple par impression sérigraphique, sur la couche conductrice. Ce procédé nécessite cependant une opération supplémentaire pour la cuisson de la peinture conductrice, ou une autre composition, parce que cette cuisson ne peut être effectuée durant le traitement de bombage de la paire de vitrages.

L'invention a pour objet un procédé, d'une mise en oeuvre technique aisée, permettant le dépôt d'électrodes de contact sur des vitrages porteurs de couches minces conductrices, dans des conditions telles que, tout à la fois, les électrodes présentent une bonne adhérence mécanique sur la couche conductrice et sur la surface du vitrage porteur, et qu'aucun traitement thermique supplémentaire ne s'impose pour fixer ou cuire les électrodes.

Selon l'invention, une solution à ce problème réside dans le dépôt d'électrodes d'amenée de courant en forme de bandes sur la couche transparente conductrice de l'électricité, en utilisant le procédé de pulvérisation à l'arc, après avoir effectué préalablement le dépôt de ladite couche conductrice transparente.

Selon le procédé de pulvérisation à l'arc, par contraste avec les autres procédés de pulvérisation thermique connus comme la pulvérisation à la flamme de fil ou de poudre ou la pulvérisation par plasma, deux fils métalliques raccordés à une source de courant continu sont simultanément amenés à converger l'un vers l'autre selon un angle déterminé, et ils sont fondus dans l'arc électrique continu qui en résulte. Les gouttes fondues ainsi obtenues sont accélérées au moyen d'un gaz de pulvérisation et projetées vers la surface du matériau à revêtir. Elles y adhèrent en général par un phénomène de microcramponnage dont l'efficacité dépend du type de la surface d'adhésion, du choix du matériau de pulvérisation et des conditions de pulvérisation.

Bien qu'on ait dû s'attendre, d'après l'expérience des procédés de pulvérisation à la flamme, à ce que tous les procédés connus de pulvérisation de métaux entraînent le même résultat, et à ce que, par le procédé de pulvérisation à l'arc aussi, la couche conductrice extrêmement mince et sensible soit endommagée ou détruite. De même, on pouvait craindre que les métaux usuels, par pulvérisation à l'arc, ne bénéficient pas d'une adhérence suffisante sur la surface du verre ou sur une multicouche transparente. Or, il s'est révélé de manière surprenante que, seul de tous les procédés connus de pulvérisation métallique, le procédé de pulvérisation à l'arc permet un contact irréprochable avec des couches minces même très sensibles. L'application de ce procédé apporte tous les avantages recherchés et elle constitue par conséquent une voie idéale pour le but souhaité. Les dépôts successifs de la couche mince conductrice et de l'électrode ne pose aucun problème de transition à l'interface électrode-couche mince. On n'a pas observé, en particulier, de détérioration ou de destruction de la couche mince, même, et cela contre toute attente, lorsque l'air est employé comme gaz de pulvérisation.

Le dépôt des électrodes peut s'effectuer à la main à l'aide d'un appareil de pulvérisation manuel, ou de manière automatique au moyen d'un dispositif à chariot. Pour les couches minces particulièrement sensibles, on peut employer comme gaz de pulvérisation, au lieu de l'air, de l'azote ou un autre gaz inerte, le cas échéant en mélange à de l'air ou à une proportion déterminée d'oxygène. On obtient déjà de bons résultats par l'emploi de métaux purs comme l'argent, le cuivre, l'aluminium, le zinc, le titane ou le chrome, ces résultats étant cependant susceptibles d'être améliorés, le cas échéant, par l'emploi d'alliages adaptés.

Il est également possible, si besoin est, d'améliorer l'adhérence des électrodes sur la couche conductrice par chauffage du vitrage, préalablement à la pulvérisation des électrodes, à une température élevée, par exemple comprise entre 200 et 300°C.

L'invention est illustrée ci-après par trois exemples différents d'exécution.

## Exemple 1

On se propose de fabriquer un vitrage feuilleté plan comportant une couche conductrice transparente pour l'utiliser comme écran contre le rayonnement électromagnétique haute fréquence.

Une feuille de verre flotté plane rectangulaire d'environ 3 mm d'épaisseur est pourvue d'une multicouche déposée par pulvérisation cathodique assistée par un champ magnétique.

La multicouche présente la structure suivante, en partant de la surface du verre :
oxyde d'étain – argent – aluminium – oxyde d'étain.

La feuille de verre flottée revêtue de la multicouche est recouverte, sur la face supportant ladite multicouche, d'une feuille de papier adhésif disposée de telle sorte qu'une bande large d'environ 1 cm demeure libre le long des quatre chants. Ensuite, à l'aide d'une tête de pulvérisation à l'arc faisant appel à de l'air comprimé comme gaz de pulvérisation, on pulvérise de l'aluminium sur les zones demeurées libres, la tête de pulvérisation étant maintenue éloignée d'environ 5 cm du bord du vitrage.

Aux électrodes de contact ainsi obtenues sont soudés, par un procédé de soudage aux ultrasons, des fils ou des bandes métalliques de raccordement. Le papier adhésif qui sert de masque est ensuite enlevé, et la feuille de verre ainsi préparée est assemblée par un procédé classique à une deuxième feuille de verre à l'aide d'une feuille thermoplastique intercalaire de butyral polyvinylique par application de chaleur et pression.

## Exemple 2

On se propose cette fois de fabriquer un vitrage feuilleté muni d'une couche conductrice transparente destiné à être employé comme pare-brise chauffant d'automobile.

Deux feuilles de verre flotté de 2 à 3 mm d'épaisseur sont découpées selon la forme souhaitée, superposées, puis bombées par un procédé de bombage usuel pour former une paire de vitrages bombés au galbe souhaité.

Après refroidissement de la paire de vitrages bombés, l'une des deux feuilles de verre est revêtue, par un procédé de dépôt sous vide, sur son côté faisant face à l'autre feuille lors du feuilletage, d'une multicouche consistant en un empilement oxyde de zinc - argent -oxyde de zinc.

Le vitrage muni de ladite couche multiple est revêtu, sur sa face supportant ladite couche, d'une feuille de papier adhésif laissant libre le long de deux chants opposés une bande de la couche multiple d'environ 2 cm de largeur. Sur ces deux bandes de bord restées libres, on pulvérise du cuivre à l'aide d'une tête de pulvérisation à l'arc en utilisant de l'air comprimé comme gaz de pulvérisation et en maintenant la tête de pulvérisation à une distance de 8 cm environ de ces bandes de bord.

Des fils métalliques de connexion, ou d'autres éléments de connexion sont soudés aux électrodes de contact ainsi préparées. Le papier adhésif est enlevé, et la feuille de verre ainsi équipée est associée à l'autre feuille de la paire de feuilles bombées ensemble par un procédé usuel de fabrication de vitrage feuilleté.

Exemple 3

Un pare-brise chauffant à couche conductrice de l'électricité destiné à une automobile est de nouveau fabriqué.

Une grande feuille de verre flotté est revêtue d'une multicouche dans une installation de dépôt en continu utilisant le procédé de pulvérisation cathodique ou de pulvérisation cathodique réactive, la couche inférieure, au contact de la surface du verre, étant constituée d'oxyde d'étain, la couche conductrice, d'argent et la couche supérieure de protection, d'oxyde d'étain.

Dans la feuille de verre ainsi revêtue, on découpe l'une des feuilles de verre d'une paire de vitrages déterminés pour constituer un vitrage feuilleté, tandis que l'autre vitrage de la paire est découpé dans une feuille de verre flotté non revêtu.

Le vitrage revêtu est disposé sur le vitrage non revêtu, la surface revêtue étant placée du côté du vitrage non revêtu, et la paire de vitrages est soumise à un traitement usuel de bombage, à une température d'environ 620°C. Après refroidissement, les deux vitrages sont séparés l'un de l'autre.

Le vitrage à couche est revêtu d'une feuille de papier adhésif laissant libre une bande de 2 cm de largeur environ de long de deux chants opposés. Sur ces bandes de bord laissées libres, on pulvérise du zinc en utilisant comme gaz de pulvérisation de l'air comprimé enrichi en azote, la tête de pulvérisation étant maintenue à une distance de 5 à 10 cm du vitrage.

Le vitrage pourvu d'électrodes de contact est doté, ainsi que décrit dans l'exemple 2, de fils ou d'éléments de connexion électrique, et assemblé à la deuxième feuille par un procédé usuel de fabrication de vitrage feuilleté.

## Revendications

1. Procédé de fabrication d'un vitrage comprenant une feuille porteuse en verre de silicate, une couche ou une multicouche conductrice de l'électricité transparente disposée sur cette feuille porteuse et au moins une électrode de contact en contact électrique avec cette couche ou cette multicouche, caractérisé en ce que les électrodes de contact sont déposées sur la couche conductrice transparente à l'aide du procédé de pulvérisation à l'arc après dépôt de cette couche conductrice.

2. Procédé selon la revendication 1, caractérisé en ce que de l'air comprimé est employé comme gaz de pulvérisation lors de la pulvérisation à l'arc.

3. Procédé selon la revendication 1, caractérisé en ce qu'un gaz inerte comme l'azote est employé comme gaz de pulvérisation lors de la pulvérisation à l'arc.

4. Procédé selon les revendications 1 à 3, caractérisé en ce que les métaux employés pour constituer les électrodes de contact sont choisis dans le groupe constitué par l'argent, le cuivre, l'aluminium, le zinc, le titane ou le chrome, chacun dans sa forme pure ou d'alliage de ces métaux, ou avec d'autres métaux.

5. Application du procédé selon l'une des revendications 1 à 4 pour le dépôt des électrodes de contact sur une multicouche conductrice de l'électricité déposée sous vide par le procédé d'évaporation ou selon un procédé de pulvérisation cathodique dont la couche de protection tout à fait à l'extérieur est composée d'un composé métallique ou d'un composé semi-conducteur, en particulier un oxyde métallique ou un oxyde semi-conducteur.

6. Application selon la revendication 5, caractérisé en ce que la multicouche conductrice de l'électricité présente une couche d'accrochage en oxyde d'étain disposée sur la surface du verre, une couche d'argent métallique et une couche externe de protection en oxyde d'étain.

7. Application du procédé selon l'une des revendications 1 à 6 pour la fabrication de vitrages automobiles chauffants bombés, où une multicouche conductrice transparente est déposée sous vide sur un vitrage plan, ce vitrage à couche est réuni, sur le côté de la couche, à un deuxième vitrage, la paire de vitrages est chauffée ensemble à la température de bombage et bombée dans la forme désirée, les vitrages sont séparés l'un de l'autre après refroidissement, et les électrodes de branchement électriques sont disposées sur la multicouche libre et les deux vitrages bombés ensemble sont assemblés par une feuille intercalaire thermoplastique de type butyral polyvinyl par application de chaleur et pression pour former un vitrage feuilleté.

**Ansprüche**

1. Verfahren zur Herstellung einer eine Trägerscheibe aus Silikatglas, eine auf dieser Trägerscheibe angeordnete elektrisch leitende transparente Schicht oder Mehrfachschicht und wenigstens eine in elektrischem Kontakt mit dieser Schicht oder dieser Mehrfachschicht stehende Kontaktierungselektrode umfassende Verglasung, **dadurch gekennzeichnet,** daß die Kontaktierungselektroden auf die transparente Leitschicht mit Hilfe des Lichtbogenspritzverfahrens nach dem Aufbringen dieser Leitschicht aufgebracht werden.

2. Verfahren nach Anspruch 1, dadurch gekennzeichnet, daß als Zerstäubergas beim Lichtbogenspritzen Druckluft verwendet wird.

3. Verfahren nach Anspruch 1, dadurch gekennzeichnet, daß als Zerstäubergas beim Lichtbogenspritzen ein Inertgas wie Stickstoff verwendet wird.

4. Verfahren nach Anspruch 1 bis 3, dadurch gekennzeichnet, daß die für die Bildung der Kontaktierungselektroden verwendeten Metalle aus einem der Metalle Silber, Kupfer, Aluminium, Zink, Titan, Chrom, jeweils in reiner Form oder als Legierung dieser Metalle oder mit anderen Metallen, bestehen.

5. Anwendung des Verfahrens nach einem der Ansprüche 1 bis 4 zum Aufbringen von Kontaktierungselektroden auf eine im Vakuum nach dem Aufdampfverfahren oder nach dem Verfahren der Kathodenzerstäubung aufgebrachte elektrisch lei-tende Mehrfachschicht, deren äußerste Schutz-schicht aus einer Metall- oder Halbleiterverbindung, insbesondere aus einem Metall- oder Halbleiteroxid, besteht.

6. Anwendung nach Anspruch 5, dadurch gekennzeichnet, daß die elektrisch leitende Mehrfachschicht eine auf der Glasoberfläche angeordnete Haftschicht aus Zinnoxid, eine metallische Silberschicht und eine äußere Schutzschicht aus Zinnoxid aufweist.

7. Anwendung des Verfahrens nach Anspruch 1 bis 6 zur Herstellung gebogener heizbarer Autoglasscheiben, wobei eine transparente elektrisch leitende Mehrfachschicht auf eine ebene Glasscheibe nach ei-nem Vakuumverfahren aufgebracht, diese beschich-tete Glasscheibe auf der Schichtseite mit einer zweiten Glasscheibe zusammengelegt, das Glasscheibenpaar gemeinsam auf Biegetemperatur erwärmt und in die gewünschte Form gebogen, die Glasscheiben nach Abkühlen voneinander getrennt und die Stromanschlußelektroden auf die freiliegende Mehrfachschicht aufgebracht und die beiden gemein-sam gebogenen Glasscheiben unter Zwischenschal-tung einer thermoplastischen Verbindungsschicht beispielsweise aus Polyvinylbutyral unter Anwendung von Wärme und Druck zu einer Verbundglasscheibe miteinander verbunden werden.

**Claims**

1. A method of making a pane comprising a carrier sheet of silicate glass, a transparent, electrically conducting layer or multiple layer disposed on this carrier sheet and at least one contact electrode in electrical contact with this layer or multiple layer, characterized in that the contact electrodes are deposited on the transparent, conducting layer by means of the arc atomization process after this electrically conducting layer has been deposited.

2. A method according to Claim 1, characterized in that compressed air is used as atomization gas in the arc atomization.

3. A method according to Claim 1, characterized in that an inert gas such as nitrogen is used as atomization gas in the arc atomization.

4. A method according to Claims 1 to 3, characterized in that the metals used for forming the contact electrodes are chosen from the group composed of silver, copper, aluminium, zinc, titanium or chromium, each in its pure form or alloy form of these metals, or with other metals.

5. Application of the method according to one of Claims 1 to 4 for the deposition of the contact electrodes onto an electrically conducting multiple layer deposited under vacuum by the vapour deposition method or according to a cathodic atomization process, of which the outermost protective layer is composed of a metallic compound or of a semiconductor compound, in particular a metallic oxide or a semiconductor oxide.

6. Application according to Claim 5, characterized in that the electrically conducting multiple layer possesses a bonding layer of tin oxide disposed on the surface of the glass, a layer of metallic silver and an outer protective layer of tin oxide.

7. Application of the method according to one of Claims 1 to 6 for the manufacture of curved, heating automobile panes, in which a transparent, conducting multiple layer is deposited under vacuum onto a flat pane, this coated pane is united, on the side of the layer, with a second pane, the pair of panes is heated together to the curving temperature and is curved to the desired shape, the panes are separated from each other after cooling, and the electrical connecting electrodes are disposed on the free multiple layer and the two jointly curved panes are assembled together with a thermoplastics intermediate sheet of the polyvinyl butyral type by application of heat and pressure to form a laminated pane.